# EUROPÄISCHE PATENTSCHRIFT

(11) **EP 0 908 361 B1**
(45) Veröffentlichungstag und Bekanntmachung des Hinweises auf die Patenterteilung: **09.04.2003**
(21) Anmeldenummer: 98118894.9
(22) Anmeldetag: 06.10.1998
(51) Int. Cl.: B60S 1/04, B60S 1/24

(54) **Wischeranlage für ein Fahrzeug**
Wiper arrangement for a vehicle
Agencement d'essuyage pour une véhicule

(30) Priorität: 10.10.1997 DE 19744911
(43) Veröffentlichungstag der Anmeldung: 14.04.1999
(73) Patentinhaber: Volkswagen Aktiengesellschaft, 38436 Wolfsburg (DE)
(72) Erfinder: Ostrowski, Wolfgang, 38446 Wolfsburg (DE)

(56) Entgegenhaltungen:
- EP-A- 0 704 357
- EP-A- 0 739 792
- DE-A- 19 546 908
- DE-C- 820 701
- US-A- 2 544 807
- US-A- 5 067 198

## Beschreibung

Die Erfindung betrifft eine Wischeranlage für ein Fahrzeug mit einem Träger, insbesondere mit einem Rahmenrohr, mit wenigstens einem Lagerbock für wenigstens eine Antriebswelle eines Wischerarmes, wobei in dem Lagerbock eine Lagerbuchse angeordnet ist, gemäß dem Oberbegriff des Anspruchs 1.

Scheibenwischeranlagen für Fahrzeuge, insbesondere Kraftfahrzeuge, werden gewöhnlich mit einem Zahnstangenantrieb oder einem Gestängeantrieb ausgerüstet. Scheibenwischeranlagen mit einem Gestängeantrieb weisen einen am Fahrzeugkörper anordbaren Träger bzw. ein Rahmenrohr für einen aus einem Wischermotor, einem Getriebe und einem umlaufenden Hebelarm bestehenden Antrieb und in der Regel zwei im Abstand zu diesem angeordnete Lagerböcke auf, wobei der Antrieb zwischen den Lagerböcken oder aber auch im Bereich eines der Lagerböcke angeordnet sein kann. In den Lagerböcken ist jeweils die Antriebswelle eines Wischerarmes angeordnet, an der auf der diesem abgewandten Seite ein Schwenkhebel drehfest angeordnet ist, der durch ein Antriebsgestänge gelenkig mit dem Hebelarm verbunden ist. Die umlaufende Bewegung des Hebelarmes wird durch dieses in eine Hin- und Herbewegung des jeweiligen Schwenkhebels und damit des Wischerarmes umgesetzt, derart, daß die Wischerarme im Parallelbetrieb bewegt werden. Der Träger kann ein Hohlprofil oder ein offenes Profil sein, an dem die Antriebselemente an einem zusätzlich angebrachten Trägerblech angeordnet und die Lagerböcke als extern erstellte Gußteile angeschraubt oder mit dem Träger verstemmt sind.

Zur Herstellung von Befestigungsmitteln an einer Karosserie des Fahrzeuges wird der Träger üblicherweise an seinen Enden zusammengedrückt und mit Bohrungen versehen, mit denen der Träger mittels beispielsweise Schraubverbindungen am Fahrzeug bzw. der Fahrzeugkarosserie befestigbar ist. Dies hat jedoch den Nachteil eines zusätzlichen Arbeitsganges, bei dem darüber hinaus im Lagerbereich der benachbarten Lagerböcke des

In der DE 195 46 908 A1 ist eine Wischeranlage für Scheiben eines Fahrzeugs mit einem Wischerlager beschrieben, das mit einem zu der Wischeranlage gehörenden Trägerrohr verbunden und von einem mit einer Lagerbuchse ausgestatteten Lagergehäuse gebildet ist, wobei eine Wischerwelle in der Lagerbuchse gelagert ist. Um die Wischeranlage kostengünstig herstellen zu können, ist ein Endabschnitt des Trägerrohres unmittelbar zu dem Lagergehäuse umgeformt. Das Ende des umgeformten Trägerrohres ist zur Befestigung der Wischeranlage mit einem Außengewinde versehen. Um die Lagerbuchse verdrehsicher im Lagergehäuse zu halten, ist an dieser eine bogenförmige Schelle ausgebildet, die an der Unterseite des Trägerrohres anliegt.

Es ist nun Aufgabe der Erfindung, eine Wischeranlage mit den Merkmalen des Oberbegriffs des Anspruchs 1 zu gestalten, die weniger aufwendig und einfach und zuverlässig an einer Fahrzeugkarosserie befestigbar ist.

Diese Aufgabe wird erfindungsgemäß durch eine Wischeranlage der o. g. Art mit den kennzeichnenden Merkmalen des Anspruchs 1 gelöst. Vorteilhafte Ausgestaltungen der Erfindung sind in den abhängigen Ansprüchen angegeben.

Die Erfindung besteht danach darin, dass bei einer Wischeranlage für ein Fahrzeug mit einem Träger, insbesondere einem Rahmenrohr, mit wenigstens einem Lagerbock mit einer in diesem angeordneten Lagerbuchse für wenigstens eine Antriebswelle eines Wischerarmes, die Lagerbuchse mit einem Befestigungsmittel für die Wischeranlage versehen ist. Dies hat den Vorteil, dass zusätzliche Bearbeitungsschritte zur Herstellung von Befestigungsmitteln an dem Träger entfallen und höhere Freiheitsgrade bei der Befestigung von IHU-Wischeranlagen erzielt werden.

In einer besonders bevorzugten Ausführungsform sind die Lagerbuchse und das Befestigungsmittel einstückig miteinander ausgebildet. Dies erzielt eine einfache und schnelle Montage der Wischeranlage und eine stabile Befestigung an der Fahrzeugkarosserie.

Für eine einfache und kostengünstige Herstellung einer stabilen Lagerbuchse ist die Lagerbuchse mit dem Befestigungsmittel ein Spritzteil, insbesondere aus Kunststoff.

Zweckmäßigerweise ist das Befestigungsmittel derart ausgebildet, dass es an einer Karosserie des Fahrzeugs befestigbar ist.

In einer besonders vorteilhaften Ausführungsform ist das Befestigungsmittel ein Befestigungsauge, eine Befestigungsöse oder eine Befestigungslasche, und bevorzugt ist die Lagerbuchse und/oder das Befestigungsmittel aus Kunststoff gefertigt.

Zweckmäßigerweise ist die Lagerbuchse in den Lagerbock einsteckbar ausgebildet und weist vorzugsweise ein Lagerauge zur Aufnahme der Antriebswelle eines Wischerarmes auf. Zweckmäßigerweise ist die Lagerbuchse in den Lagerbock einsteckbar ausgebildet und weist vorzugsweise ein Lagerauge zur Aufnahme der Antriebswelle eines Wischerarmes auf.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine schematische Explosionsdarstellung einer bevorzugten Ausführungsform einer erfindungsgemäßen Wischeranlage und
- Fig. 2: die Wischeranlage von Fig. 1 in montiertem Zustand.

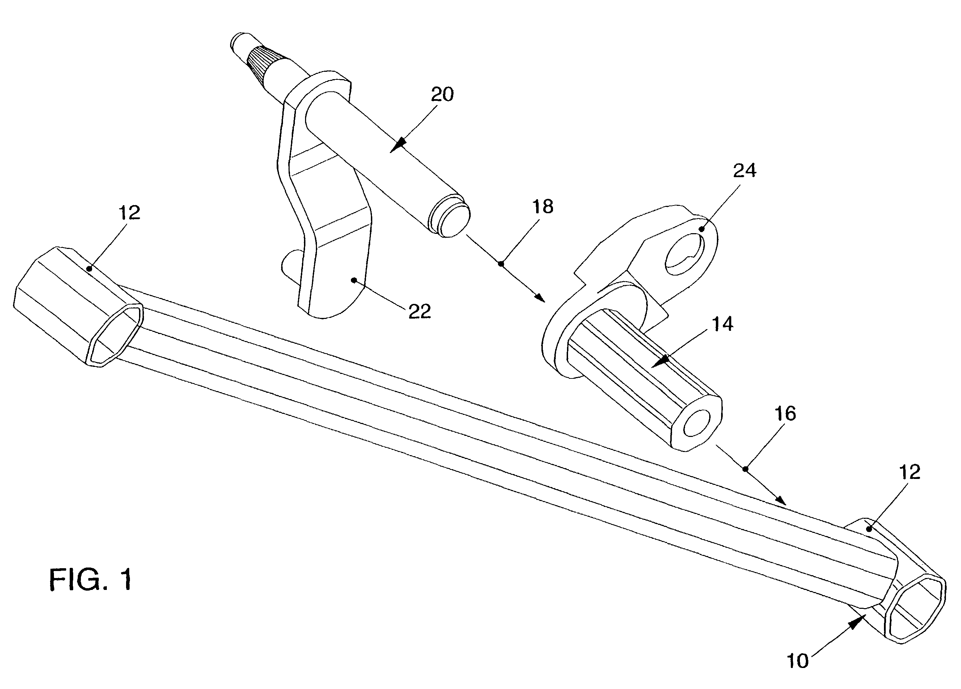

Die in Figur 1 dargestellte bevorzugte Ausführungsform einer erfindungsgemäßen Wischeranlage umfaßt einen Träger 10 in Form eines Rahmenrohres, Lagerböcke 12 am Rahmenrohr 10 und eine Lagerbuchse 14, welche in den Lagerbock 12 einsteckbar ist. In der Darstellung gemäß Figur 1 ist beispielhaft eine Lagerbuchse 14 für einen Lagerbock 12 dargestellt, jedoch ist für jeden Lagerbock 12 eine Lagerbuchse 14 vorgesehen. Die Lagerbuchse 14 wird in Pfeilrichtung 16 in eine Öffnung des Lagerbockes 12 eingeschoben und dort fixiert. Die Lagerbuchse 14 ist bevorzugt ein Kunststoffteil und besonders bevorzugt ein Kunststoff-Spritzteil und wird beispielsweise in den Lagerbock 12 eingepreßt.

Die Lagerbuchse 14 nimmt eine in Pfeilrichtung 18 eingesteckte Wischerwelle 20 eines nicht dargestellten Wischerarmes mit Kurbel 22 auf.

An der Lagerbuchse 14 und bevorzugt einstückig mit dieser ist eine Befestigungsvorrichtung 24 in Form eines Befestigungsauges ausgebildet. Diese ist an einem entsprechenden Befestigungspunkt einer nicht dargestellten Fahrzeugkarosserie beispielsweise mittels einer Schraubverbindung befestigbar. Es sind jedoch auch andere Verbindungen zwischen Befestigungsauge 24 und Karosserie möglich, wie beispielsweise Nieten oder Schweißen Über die Lagerbuchse 14 ist eine starre Verbindung zwischen dem Befestigungsauge 24 und dem Rahmenrohr 10 hergestellt, so daß das Befestigungsauge eine starre Verbindung zwischen der Fahrzeugkarosserie und der Wischeranlage herstellt. Weitergehende Befestigungen zwischen dem Rahmenrohr und der Karosserie sind entbehrlich, so daß auch weitere Bearbeitungsschritte an dem Rahmenrohr 10 zum Herstellen von Befestigungseinrichtungen an dem Rahmenrohr 10 nicht mehr erforderlich sind.

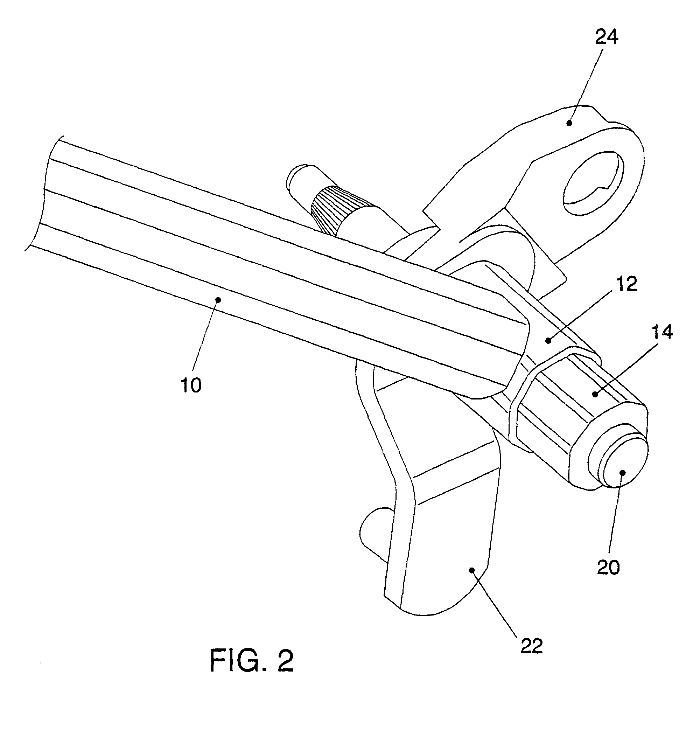

Figur 2 zeigt die bevorzugte Ausführungsform der erfindungsgemäßen Wischeranlage von Figur 1 in montiertem Zustand. Das Befestigungsauge 24 dient als Befestigungspunkt der Wischeranlage an der Fahrzeugkarosserie. Wie sich unmittelbar ergibt hat diese Anordnung den weiteren Vorteil, daß eine starre Verbindung der Wischeranlage an der Karosserie genau dort erfolgt, wo auch Kräfte beim Betrieb der Wischeranlage auftreten, nämlich umgreifend an der Antriebswelle 20. Bei der herkömmlichen Befestigungsart mit Befestigungsaugen am Rahmenrohr 10 ist dagegen ein mehr oder weniger langes Stück Trägerrohr zwischen dem mit Kräften belasteten Lagerbock 12 und der Befestigung an der Karosserie vorhanden, welches je nach Belastung und Stärke des Rahmenrohres 10 zu einem mehr oder weniger starken Spiel der Befestigung führt und ggf. die Festigkeit der Befestigung negativ beeinflußt. Im Gegensatz dazu sorgt die erfindungsgemäße Anordnung für eine direkte Befestigung der mit Kräften beaufschlagten Teile, ohne daß Kräfte über das Rahmenrohr in die Karosserie abgeleitet werden müssen.

### BEZUGSZEICHENLISTE

- 10: Träger/Rahmenrohr
- 12: Lagerböcke
- 14: Lagerbuchse
- 16: Pfeilrichtung
- 18: Pfeilrichtung
- 20: Wischerwelle
- 22: Kurbel
- 24: Befestigungsvorrichtung/Befestigungsauge

## Patentansprüche

1. Wischeranlage für ein Fahrzeug mit einem Träger (10), insbesondere mit einem Rahmenrohr, mit wenigstens einem Lagerbock (12) für wenigstens eine Antriebswelle (20) eines Wischerarmes, wobei in dem Lagerbock (12) eine Lagerbuchse (14) angeordnet ist, und mit wenigstens einem Befestigungsmittel für die Wischeranlage an der Fahrzeugkatosserie,
**dadurch gekennzeichnet, dass** das Befestigungsmittel (24) an der Lagerbuchse (14) ausgebildet ist.

2. Wischeranlage nach Anspruch 1,
**dadurch gekennzeichnet, daß**
die Lagerbuchse (14) und das Befestigungsmittel (24) einstückig miteinander ausgebildet sind.

3. Wischeranlage nach Anspruch 1 oder 2,
**dadurch gekennzeichnet, daß**
die Lagerbuchse (14) mit dem Befestigungsmittel (24) ein Spritzteil ist.

4. Wischeranlage nach einem der vorhergehenden Ansprüche,
**dadurch gekennzeichnet, daß**
das Befestigungsmittel (24) ein Befestigungsauge, eine Befestigungsöse oder eine Befestigungslasche ist.

5. Wischeranlage nach einem der vorhergehenden Ansprüche,
**dadurch gekennzeichnet, daß**
die Lagerbuchse (14) und/oder das Befestigungsmittel (24) aus Kunststoff gefertigt ist.

6. Wischeranlage nach einem der vorhergehenden Ansprüche,
**dadurch gekennzeichnet, daß**
die Lagerbuchse (14) in den Lagerbock (12) einsteckbar ist.

7. Wischeranlage nach einem der vorhergehenden Ansprüche,
**dadurch gekennzeichnet, daß**
die Lagerbuchse (14) ein Lagerauge zur Aufnahme der Antriebswelle (20) eines Wischerarmes aufweist.

## Claims

1. Wiper system for a vehicle, having a support (10), in particular having a frame tube, having at least one bearing block (12) for at least one drive shaft (20) of a wiper arm, a bearing bushing (14) being arranged in the bearing block (12), and having at least one fastening means for the wiper system on the vehicle body, **characterized in that** the fastening means (24) is formed on the bearing bushing (14).

2. Wiper system according to Claim 1, **characterized in that** the bearing bushing (14) and the fastening means (24) are formed as a single piece with each other.

3. Wiper system according to Claim 1 or 2, **characterized in that** the bearing bushing (14) together with the fastening means (24) is an injection-moulded part.

4. Wiper system according to one of the preceding claims, **characterized in that** the fastening means (24) is a fastening gudgeon, a fastening eyelet or a fastening tab.

5. Wiper system according to one of the preceding claims, **characterized in that** the bearing bushing (14) and/or the fastening means (24) is/are manufactured from plastics.

6. Wiper system according to one of the preceding claims, **characterized in that** the bearing bushing (14) can be inserted into the bearing block (12).

7. Wiper system according to one of the preceding claims, **characterized in that** the bearing bushing (14) has a bearing gudgeon for holding the drive shaft (20) of a wiper arm.

## Revendications

1. Agencement d'essuie-glace pour un véhicule, comprenant un support (10), en particulier un tube cadre, avec au moins un palier (12) pour au moins un arbre d'entraînement (20) d'un bras d'essuie-glace, un coussinet (14) étant disposé dans le palier (12), et comprenant au moins un moyen de fixation pour l'agencement d'essuie-glace sur la carrosserie du véhicule,
**caractérisé en ce que** le moyen de fixation (24) est réalisé sur le coussinet (14).

2. Agencement d'essuie-glace selon la revendication 1, **caractérisé en ce que** le coussinet (14) et le moyen de fixation (24) sont réalisés d'une pièce l'un avec l'autre.

3. Agencement d'essuie-glace selon la revendication 1 ou 2, **caractérisé en ce que** le coussinet (14) est une pièce moulée par injection avec le moyen de fixation (24).

4. Agencement d'essuie-glace selon l'une quelconque des revendications précédentes, **caractérisé en ce que** le moyen de fixation (24) est un oeil de fixation, un oeillet de fixation ou une patte de fixation.

5. Agencement d'essuie-glace selon l'une quelconque des revendications précédentes, **caractérisé en ce que** le coussinet (14) et/ou le moyen de fixation (24) sont fabriqués en plastique.

6. Agencement d'essuie-glace selon l'une quelconque des revendications précédentes, **caractérisé en ce que** le coussinet (14) peut être enfoncé dans le palier (12).

7. Agencement d'essuie-glace selon l'une quelconque des revendications précédentes, **caractérisé en ce que** le coussinet (14) présente un oeil de support pour recevoir l'arbre d'entraînement (20) d'un bras d'essuie-glace.
